# EUROPEAN PATENT APPLICATION

(11) **EP 1 467 279 A1**
(43) Date of publication of application: **13.10.2004**
(21) Application number: 02760770.4
(22) Date of filing: 28.08.2002
(51) Int. Cl.: G06F 7/00

(54) **OPERATION APPARATUS AND OPERATION SYSTEM**

(30) Priority: 29.08.2001 JP 2001259644
(71) Applicant: NTI, Inc., Yokkaichi-shi, Mie 512-8044 (JP)
(72) Inventor: NAKAMURA, Takatoshi, Yokkaichi-shi, Mie 512-8044 (JP); YOKOTA, Akihiro, Yokkaichi-shi, Mie 512-8044 (JP)
(74) Representative: Grünecker, Kinkeldey, Stockmair & Schwanhäusser Anwaltssozietät
(86) International application number: PCT/JP2002/008681
(87) International publication number: WO 2003/025737

(57) **Abstract**

The present invention relates to a processing device performing a series of operations on an input and producing an output. An objective of the invention is to provide a processing device that can perform high-speed and flexible processing. According to the invention, the processing device includes multiple arithmetic cells, each selecting a predetermined one of multiple inputs, performing a reserved operation, and producing an output. The output of each arithmetic cell is supplied to one of the inputs of multiple arithmetic cells.

## Description

### Field of the Invention

The invention relates to a processing device and processing system. The invention, in particular, relates to a processing device and processing system that perform a series of operations on an input to produce an output.

### Description of the Prior Art

As is known, the popular devices to operate on digit data are CPU (Central Processing Unit), DSP (Digital Signal Processor), and so on. Within these processing devices, ALU (Arithmetic Logic Unit) exerts multiple rounds of operation on digit data by the operation program to perform a series of operations.

Furthermore, when special circuit is used to perform processing, the processing is high-speed if data flows through the arithmetic cells in order by the reserved operation program.

Therefore, as is the prior art, when ALU (Arithmetic Logic Unit) exerts multiple rounds of operation on digit data by the operation program to perform a series of operations, although the operation program is decided by expected processing and the process is flexible, yet the process is complex. Because ALU exerts multiple rounds of operation on digit data, latency is necessary to make the timing sequence of the data consistent so that high processing gets difficulty.

Furthermore, when special circuit is used to perform processing, the issues may appear that only reserved operations can be performed; yet flexible processing is difficulty.

The invention is based on the above points, so the objective is to provide a processing device and processing system that can perform high-speed and flexible processing.

### Summary of the Invention

The invention includes multiple arithmetic cells each selecting a predetermined one of multiple inputs, performing a reserved operation, and producing an output. The output of each arithmetic cell is supplied to one of the inputs of multiple arithmetic cells.

According to the invention, the processing is distributed in advance among the multiple arithmetic cells and data flows in a preset order, so the series of operations can be performed in pipelining and the processing is high-speed.

### Figures explanation

Fig. 1 is the block diagram of an implementation example of the invention.
Fig.2 is the block diagram of processing device 100.
Fig.3 is the block diagram of arithmetic unit 104.
Fig.4 is the block diagram of arithmetic cell 201-1.
Fig.5 is the operation diagram of arithmetic circuit 302.
Fig.6 is the block diagram of output unit 203.
Fig.7 is the detailed operation diagrams of processing device.
Fig.8 is the detailed operation diagrams of processing device.
Fig.9 is the block diagram of modified example 1 of the invention.
Fig.10 is the block diagram of modified example 2 of the invention.
Fig.11 is the block diagram of modified example 3 of the invention.
Fig. 12 is the block diagram of modified example 4 of the invention.

### Explanations of reference numbers

1: data processing system
11: data processing module
12: input device
13: display
21: CPU
22, 23: wafer group
24: memory module
25: video wafer
26: PCI bus
27: PCI slot
28: hard disk drive
29: ROM
30: ISA bus
31: ISA slot
32: USB port
101: input amplifier
102: output amplifier
103: I/O port
104: arithmetic unit
105: memory module
106: reserved working storage
107: I/F
108: microprocessor
109: communication working storage
110: ROM
111: RAM
112: microprocessor I/O port
120: printed circuit board
201-1∼201-N: N arithmetic cells (N is an integer not smaller than 2)
202-1∼202-(N+3): bus
203, 204: output unit
301: multiplexer
302: arithmetic circuit
401: multiplexer
501: analog-to-digital conversion
502: band selecting;
503: absolute value processing
504: clutter rejecting
505: envelope detecting
506: amplifying
507: quieting
508: digital-to-analog conversion
601-1∼601-k: PCI slot
602-1∼602-k: PCI board
701-1∼701-j: PCI board
702-1∼702-j: PCI slot

### Preferable implementation example of this invention

First of all, illustrate the data processing system the processing device in the invention applies to.

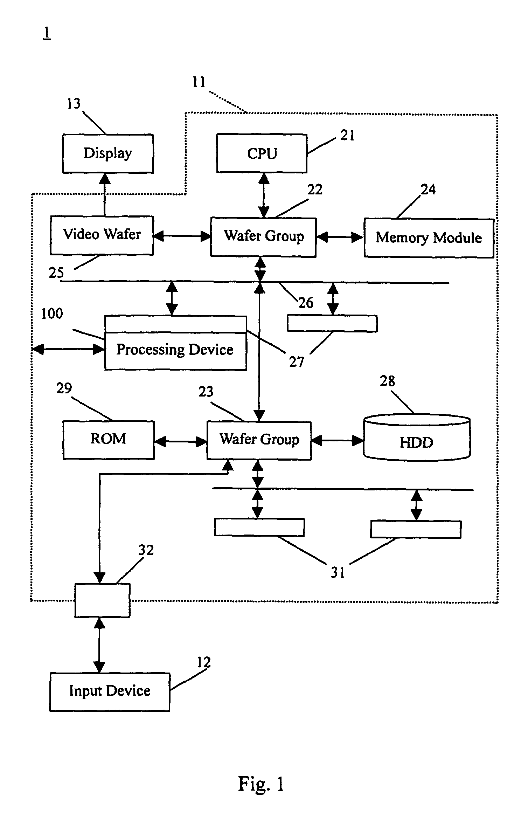

Fig.1 is the block diagram of an implementation example of the invention.

Data processing system 1 of the implementation example involves data processing module 11, input device 12 and display 13.

Data processing module 11 involves CPU 21, wafer group 22 and 23, memory module 24, video wafer 25, PCI bus 26, PCI slot 27, hard disk drive 28, ROM 29, ISA bus 30, ISA slot 31 and USB port 32.

CPU 21 receives data from wafer group 22, performs operations, and transmits the operation results back to wafer group 22. Wafer group 22 exchanges data with memory module 24 and video memory module 25 and, at the same time, exchanges data with PCI bus 26. Memory module 24 is composed of DRAM group, acting as temporary storage for CPU21. Video wafer 25 receives data from wafer group 22 and transmits to display 13. Display 13 displays the data from video wafer 25.

PCI bus 26 connects with PCI slot 27. The PCI board which processing device 100 is mounted on is plugged in PCI slot 27.

Furthermore, PCI bus 26 connects with wafer group 23. Wafer group 23 is the interface of PCI bus 26, hard disk drive 28, ROM 29, ISA bus 30 and USB port 32.

Next, illustrate the processing device 100 in detail.

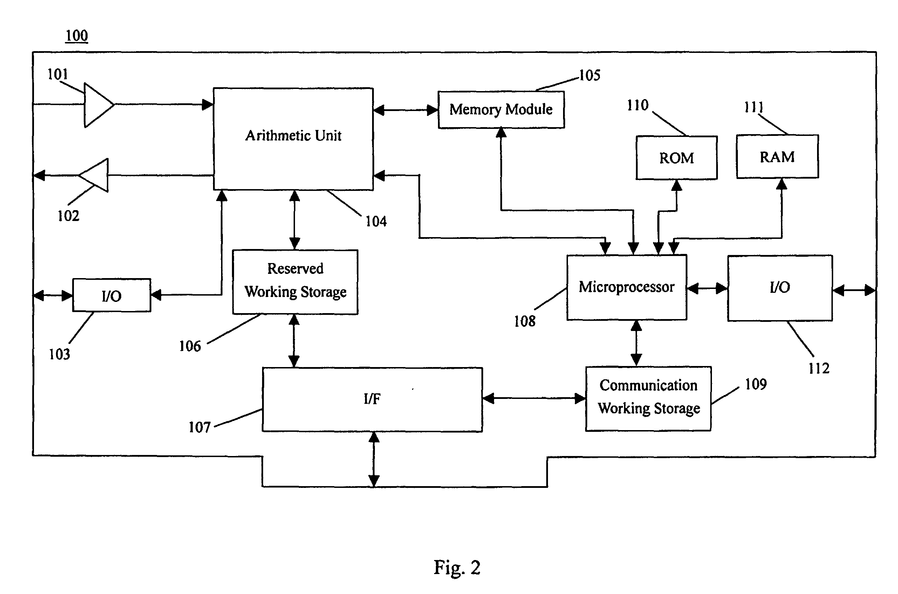

Fig.2 is the block diagram of processing device 100.

Processing device 100, that is to say, PCI board, is a printed circuit board 120 which input amplifier 101, output amplifier 102, I/O port 103, arithmetic unit 104, memory module 105, reserved working storage 106, I/F 107, microprocessor 108, communication working storage 109, ROM 110, RAM111 and microprocessor I/O port 112 are mounted on.

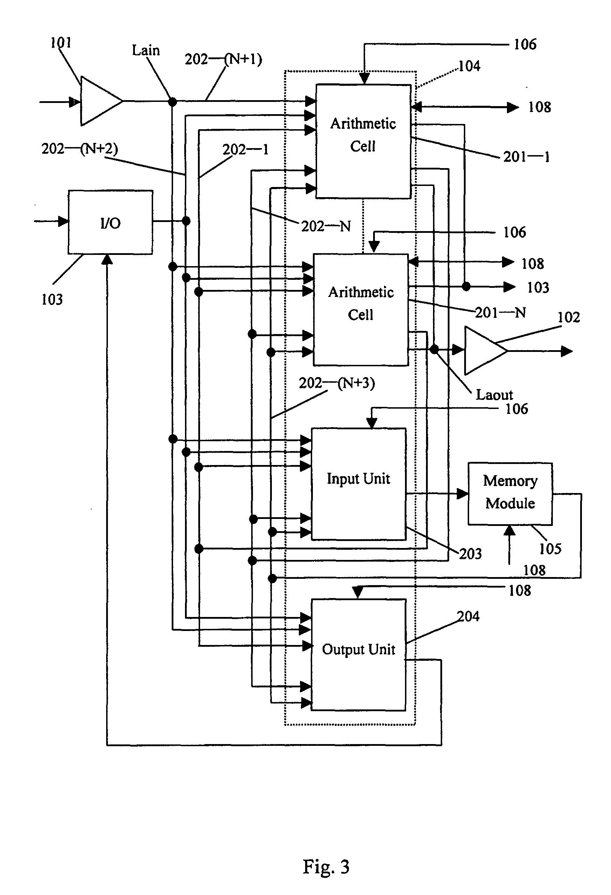

Fig.3 is the block diagram of arithmetic unit 104.

Arithmetic unit 104 involves N arithmetic cells 201-1∼201-N (N is an integer not smaller than 2), bus 202-1∼202-(N+3) and I/O units 203 and 204.

Bus 202-1 receives output data of arithmetic cell 201-1; bus 202-2 receives output data of arithmetic cell 201-2. Likewise, bus 202-3∼202-(N-1) receives output data of arithmetic cells 201-3∼202-(N-1) respectively, and bus 202-N receives output data of arithmetic cell 201-N. Furthermore, bus 202-(N+1) receives output data of input amplifier 101, bus 202-(N+2) receives output data of I/O port 103, and bus 202-(N+3) receives output data of memory module 105.

Furthermore, bus 202-1∼202-(N+3) supply the input data of arithmetic cells 201-1∼202-N and output units 203 and 204. Arithmetic cells 201-1∼202-N receives the data on the preset buses among bus 202-1∼202-(N+3), and performs the reserved operation. Moreover, output unit 203 transmits the data on the preset bus among bus 202-1∼202-(N+3) to memory module 105. Output unit 204 transmits the data on the preset bus among bus 202-1∼202-(N+3) to I/O port 103.

Next, illustrate the arithmetic cell 201-1 in detail.

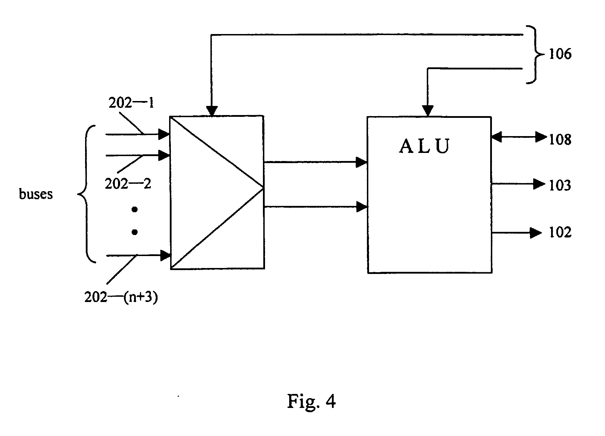

Fig.4 is the block diagram of arithmetic cell 201-1.

Arithmetic cell 201-1 consists of multiplexer 301 and arithmetic circuit 302.

Bus 202-1∼202-(N+3) are connected with inputs of multiplexer 301. Multiplexer 301 selects one or two buses among bus 202-1∼202-(N+3) according to the bus-selecting information in reserved working storage 106, and transmits the data on the selected buses to arithmetic circuit 302.

The input data to arithmetic circuit 302 is the data on the one or two buses selected by multiplexer 301. Arithmetic circuit 302 is mainly composed of ALU (Arithmetic Logic Unit), and performs the reserved operation on the data from multiplexer 301 according to operation-selecting information in reserved working storage 106. The operation result by arithmetic circuit 302 is transmitted to bus 202-1.

In addition, other arithmetic cells 201-2∼201-N have the same architecture as arithmetic cells 201-1, so the illustrations of them are omitted.

Next, illustrate the function of arithmetic circuit 302.

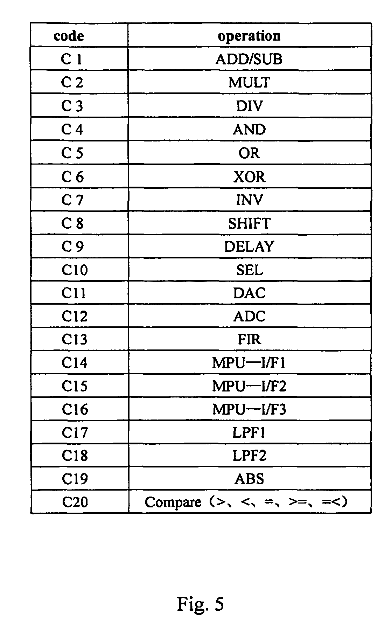

Fig.5 is the operation diagram of arithmetic circuit 302.

Arithmetic circuit 302 is supplied the operation-selecting information C1∼C20 stored in advance in reserved working storage 106. Arithmetic circuit 302 performs the reserved operation according to operation-selecting information C1∼C20 in reserved working storage 106.

When the operation-selecting information in reserved working storage 106 is C1, arithmetic circuit 302 performs ADD/SUB operation on the data on the two buses selected by multiplexer 301. When the operation-selecting information in reserved working storage 106 is C2, arithmetic circuit 302 performs MULT operation on the data on the two buses selected by multiplexer 301.

When the operation-selecting information in reserved working storage 106 is C3, arithmetic circuit 302 performs DIV operation on the data on the two buses selected by multiplexer 301. When the operation-selecting information in reserved working storage 106 is C4, arithmetic circuit 302 performs AND logic operation on each bit of the data on the two buses selected by multiplexer 301.

When the operation-selecting information in reserved working storage 106 is C5, arithmetic circuit 302 performs OR logic operation on each bit of the data on the two buses selected by multiplexer 301. When the operation-selecting information in reserved working storage 106 is C6, arithmetic circuit 302 performs XOR logic operation on each bit of the data on the two buses selected by multiplexer 301.

When the operation-selecting information in reserved working storage 106 is C7, arithmetic circuit 302 performs INV logic operation on each bit of the data on the bus selected by multiplexer 301. When the operation-selecting information in reserved working storage 106 is C8, arithmetic circuit 302 performs shift logic operation with a predetermined number on the data on the bus selected by multiplexer 301.

When the operation-selecting information in reserved working storage 106 is C9, arithmetic circuit 302 delays the data on the bus selected by multiplexer 301. When the operation-selecting information in reserved working storage 106 is C 10, arithmetic circuit 302 transmits the data, which is on the bus selected by multiplexer 301, to bus 202-1 or I/O control unit selectively.

When the operation-selecting information in reserved working storage 106 is C11, arithmetic circuit 302 converts the data, which is on the bus selected by multiplexer 301, to analog signal and, then transmits to analog signal output line Laout. Analog signal output line Laout connects with output amplifier 102, and output amplifier 102 is to amplify the analog signal on signal output line Laout to transmits. When the operation-selecting information in reserved working storage 106 is C12, arithmetic circuit 302 converts the analog signal, which is on analog signal input line Lain selected by multiplexer 301, to digit data. The digit data is then transmitted to bus 202-1.

When the operation-selecting information in reserved working storage 106 is C 13, arithmetic circuit 302 performs digital filtering with the preset filter factors on the data on the bus selected by multiplexer 301, and then transmits. That is to say, arithmetic circuit 302 acts as the digital filter with the expected characteristics. When the operation-selecting information in reserved working storage 106 is C14, arithmetic circuit 302 transmits the data on the bus selected by multiplexer 301 to port 1 of microprocessor. Microprocessor operates on the data by the reserved operation program, and then transmits back to arithmetic circuit 302. Arithmetic circuit 302 transmits the processed data by microprocessor to bus 202-1.

When the operation-selecting information in reserved working storage 106 is C 15, arithmetic circuit 302 transmits the data on the bus selected by multiplexer 301 to port 2 of microprocessor. Microprocessor operates on the data by the reserved operation program, and then transmits back to arithmetic circuit 302. Arithmetic circuit 302 transmits the processed data by microprocessor to bus 202-1. When the operation-selecting information in reserved working storage 106 is C 16, arithmetic circuit 302 transmits the data on the bus selected by multiplexer 301 to port 3 of microprocessor. Microprocessor operates on the data by the reserved operation program, and then transmits back to arithmetic circuit 302. Arithmetic circuit 302 transmits the processed data by microprocessor to bus 202-1.

When the operation-selecting information in reserved working storage 106 is C 17, arithmetic circuit 302 performs digital filtering with the preset low-pass filter factors on the data on the bus selected by multiplexer 301. When the operation-selecting information in reserved working storage 106 is C18, arithmetic circuit 302 performs digital filtering with the preset low-pass filter factors on the data on the bus selected by multiplexer 301.

When the operation-selecting information in reserved working storage 106 is C19, arithmetic circuit 302 transmits the absolute value of the data on the bus selected by multiplexer 301. When the operation-selecting information in reserved working storage 106 is C20, arithmetic circuit 302 performs compare operations, such as >, <, =, > =, = <, on the data on the two buses selected by multiplexer 301, and then transmits the comparison result.

As is illustrated above, expected buses are selected according to the operation-selecting information C1∼C20 in reserved working storage 106, and expected operation is performed on the data on the selected buses.

In addition, other arithmetic cells 201-2∼201-N have the same architecture as arithmetic cells 201-1, so the illustrations of them are omitted.

Bus 202-1∼202-(N+3) are connected with inputs of output unit 203.

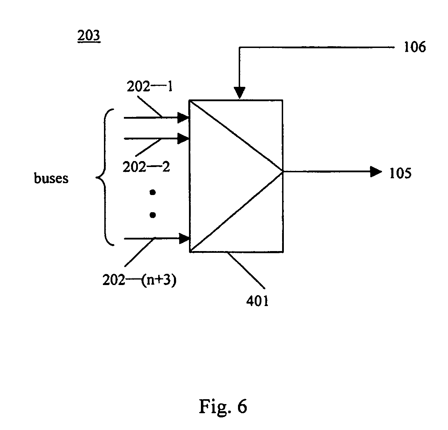

Fig.6 is the block diagram of output unit 203.

The key part of output unit 203 is multiplexer 401. Bus 202-1∼202-(N+3) are connected with inputs of multiplexer 401. Furthermore, the data on the bus selected by the bus-selecting information in reserved working storage 106 is transmitted to I/O port by multiplexer 401.

Furthermore, output unit 204 has the same architecture as output unit 203. Output data of output unit 203 is transmitted to memory module, and memory module views the data as address to export the corresponding data stored in memory module. The data in memory module corresponding to its address is in advance stored in microprocessor. The output data of memory module is transmitted to bus 201-(N+3), and then is transmitted to inputs of arithmetic cells 201-1∼201-N and output unit 203.

Next, illustrate the detailed operation by the processing device in the implementation example.

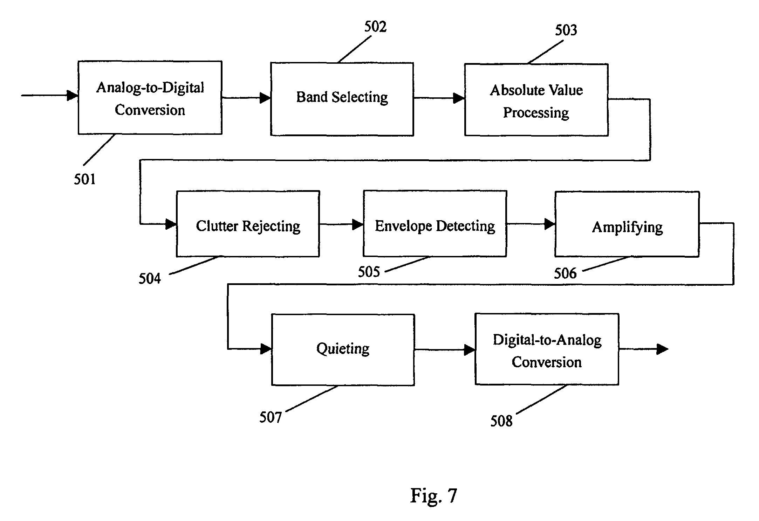

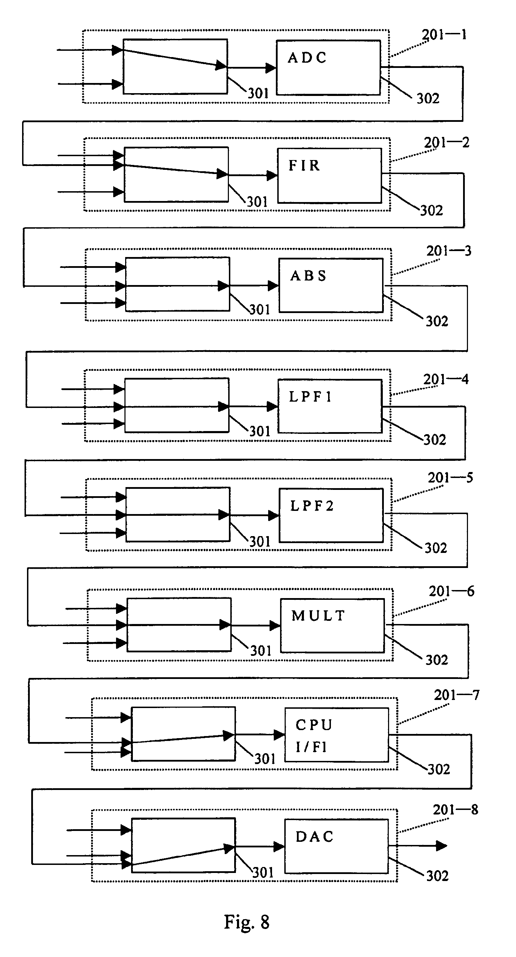

Fig.7 and Fig.8 are the detailed operation diagrams of processing device.

Herein, explain the principle of AM (Amplitude Modulation) detecting. AM detecting, which is realized by analog-to-digital conversion 501, band selecting 502, absolute value processing 503, clutter rejecting 504, envelope detecting 505, amplifying 506, quieting 507 and digital-to-analog conversion 508, is shown in Fig.7.

Analog-to-digital conversion 501 is to convert the input analog signal to digital signal. Band selecting 502 is realized by digital filter to perform digital filtering on the digit data after analog-to-digital conversion 501. The output data of band selecting 502 is converted to absolute value for transmission by absolute value processing 503. The absolute value of the data is next processed by clutter rejecting 504. Clutter rejecting 504 is realized by digital low-pass filter to filter off the unnecessary signal components.

Envelope detecting 505 is realized by digital low-pass filter to detect envelope from the output data of clutter rejecting 504. Amplifying 506 amplifies the digit data through multiplying digit data with a constant. Quieting 507 shuts off the digit data output as soon as quieting indication is active. Digital-to-analog conversion 508 converts the AM detecting digit data to analog signal.

The above analog-to-digital conversion 501, band selecting 502, absolute value processing 503, clutter rejecting 504, envelope detecting 505, amplifying 506, quieting 507 and digital-to-analog conversion 508 can be performed by arithmetic cells 201-1∼201-8 in order according to the bus-selecting information and operation-selecting information in reserved working storage 106. Assuming that the user is operation input device, or driver of processing device, or application program, in view of the reserved AM detecting, the bus-selecting information and operation-selecting information are set in reserved working storage 106. Here, bus-selecting information and operation-selecting information in reserved working storage 106 are for arithmetic cells 201-1∼201-N.

As is shown in Fig.8, bus-selecting information can be set just as multiplexer 301 of arithmetic cell 201-1 selects analog signal input line Lain. Moreover, operation-selecting information C 12 can be set just as arithmetic circuit 302 performs analog-to-digital conversion.

Bus-selecting information can be set just as multiplexer 301 of arithmetic cell 201-2 selects bus 202-1 which has received output of arithmetic cell 201-1. Moreover, operation-selecting information C13 can be set just as arithmetic circuit 302 performs digital filtering.

Bus-selecting information can be set just as multiplexer 301 of arithmetic cell 201-3 selects bus 202-2 which has received output of arithmetic cell 201-2. Moreover, operation-selecting information C19 can be set just as arithmetic circuit 302 performs absolute value processing.

Bus-selecting information can be set just as multiplexer 301 of arithmetic cell 201-4 selects bus 202-3 which has received output of arithmetic cell 201-3. Moreover, operation-selecting information C17 can be set just as arithmetic circuit 302 performs low-pass filtering.

Bus-selecting information can be set just as multiplexer 301 of arithmetic cell 201-5 selects bus 202-4 which has received output of arithmetic cell 201-4. Moreover, operation-selecting information C18 can be set just as arithmetic circuit 302 performs low-pass filtering.

Bus-selecting information can be set just as multiplexer 301 of arithmetic cell 201-6 selects bus 202-5 which has received output of arithmetic cell 201-5. Moreover, operation-selecting information C2 can be set just as arithmetic circuit 302 performs multiplication operation.

Bus-selecting information can be set just as multiplexer 301 of arithmetic cell 201-7 selects bus 202-6 which has received output of arithmetic cell 201-6. Moreover, operation-selecting information C14 can be set just as arithmetic circuit 302 performs quieting operation with the help of microprocessor.

Bus-selecting information can be set just as multiplexer 301 of arithmetic cell 201-8 selects bus 202-7 which has received output of arithmetic cell 201-7. Moreover, operation-selecting information C11 can be set just as arithmetic circuit 302 performs digital-to-analog conversion.

After the above steps, the analog signal on the analog signal input line Lain is converted to digital data by arithmetic cell 201-1, and then is transmitted to arithmetic cell 201-2 through bus 202-1. Arithmetic cell 201-2 performs digital filtering on the data on bus 202-1 and abstracts the components in expected frequency band. The processed data by digital filter in arithmetic cell 201-2 is transmitted to arithmetic cell 201-3 through bus 202-2.

Arithmetic cell 201-3 produces the absolute value of the data on bus 202-2. Then the absolute value is transmitted to arithmetic cell 201-4 through bus 202-3. Arithmetic cell 201-4 performs digital filtering with the preset low-pass filter factors on the data on bus 202-3 to filter off the clutter components. The processed data by arithmetic cell 201-4 is transmitted to arithmetic cell 201-5 through bus 202-4.

Arithmetic cell 201-5 performs digital filtering with the preset low-pass filter factors on the data on bus 202-4 to produce the envelope. The processed data by arithmetic cell 201-5 is transmitted to arithmetic cell 201-6 through bus 202-5.

Arithmetic cell 201-6 performs multiplication operation on the data on bus 202-5 with a predetermined coefficient. The processed data by arithmetic cell 201-6 is transmitted to arithmetic cell 201-7 through bus 202-6. Arithmetic cell 201-7 transmits the data on bus 202-6 to microprocessor..

When quieting indication is inactive, microprocessor transmits the received data back to arithmetic cell 201-7; when quieting indication is active, microprocessor performs quieting operation and shuts off the data output to arithmetic cell 201-7. The data from microprocessor is transmitted to arithmetic cell 201-8 through bus 202-7. Arithmetic cell 201-8 converts the digital data on bus 202-7 to analog signal, and then transmits to analog signal output line Laout.

As is illustrated above, the analog signal on analog signal input line Lain goes through a process of AM detecting, and then exports on analog signal output line Laout. Here, in the implementation example, the process can be performed in serial by arithmetic cells 201-1∼201-8 according to the bus-selecting information and operation-selecting information in reserved working storage 106. That is to say, the process can be performed in pipelining and be high-speed.

Furthermore, if the bus-selecting information and operation-selecting information in reserved working storage 106 is replaced, much processing can be popularly performed.

In addition, although the processing device in the implementation example is mounted on PCI board which is plugged in PCI slot of PC main board, yet ISA port, USB serial port and IEEE1394 serial port are also applicable.

In addition, arithmetic cells 201-1∼201-N, in the implementation example, can be set by microprocessor I/O port 112. For example, communicate with microprocessor 108 through microprocessor I/O port 112 to change the contents of memory module 105 and the bus-selecting information and operation-selecting information in reserved working storage 106.

Furthermore, for purpose of simplification in the operation illustration of the implementation example, each of arithmetic cells 201-1∼201-N only performs one operation to finish a serial of operations as a whole. However, if the bus-selecting information and operation-selecting information in reserved working storage 106 is stored in advance in operation program in PC, and the bus-selecting information and operation-selecting information are reset for next operation, arithmetic cell can perform operations more than n times in succession. Therefore, large-scale operation may also be performed with high speed.

Thus, operation program can be set freely by routine so that FPGA is unnecessary for circuit design. Moreover, user can freely develop program with the help of development tools as user's high-speed and special arithmetic aid.

Furthermore, in the above implementation example, arithmetic cells 201-1∼201-N involve ALU302. Each arithmetic cell can select an operation from the multiple operations according to advance setting, yet different operations can be assigned to arithmetic cells 201-1∼201-N respectively.

Furthermore, make the relation between address and stored data in memory module 105 a form of function. When the data is supplied to address of memory module 105, the corresponding data can be exported. Thus, the operation results of the function can be got without complex arithmetic.

Furthermore, although only an arithmetic unit 104 is mounted on PCI board, yet multiple ones can be applicable.

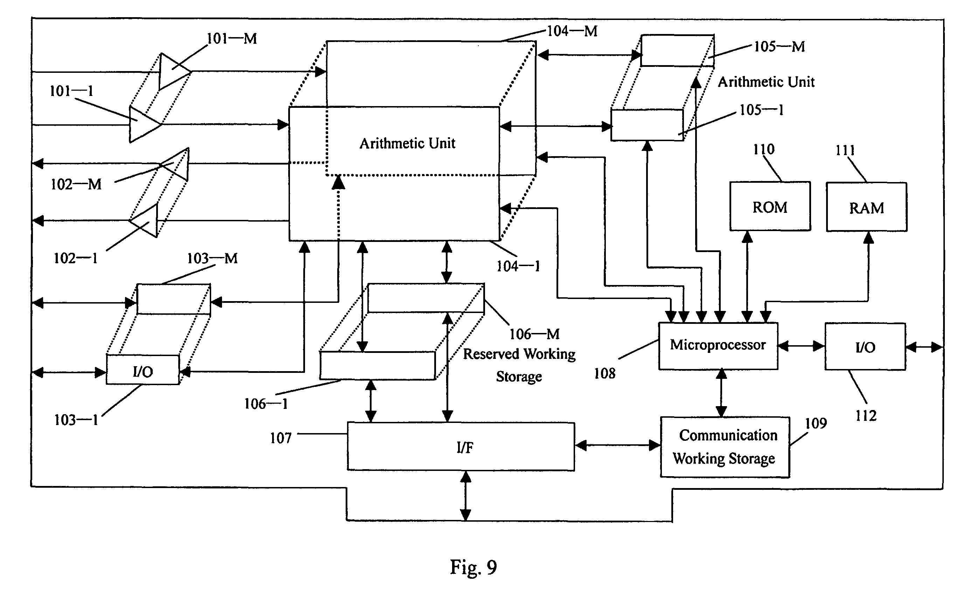

Fig.9 is the block diagram of modified example 1 of the invention. The same parts as Fig.2 have the same symbols and the corresponding explanations are omitted.

Processing device 200 involves M arithmetic units 104-1∼104-M. Arithmetic units 104-1∼104-M are assigned processing by CPU 21, each having individual process. Each arithmetic unit performs the assigned processing by CPU 21 in the above pipelining.

The processing results by arithmetic units 104-1∼104-M are transmitted to CPU21 through microprocessor. CPU21 integrates the processing results from arithmetic units 104-1∼104-M to perform a serial of operations.

In addition, in the above modified example, although multiple arithmetic units 104 are mounted on a single PCI board, yet the processing system of multiple PCI slots plugged by a PCI board which arithmetic unit 104 is mounted on can be taken into consideration.

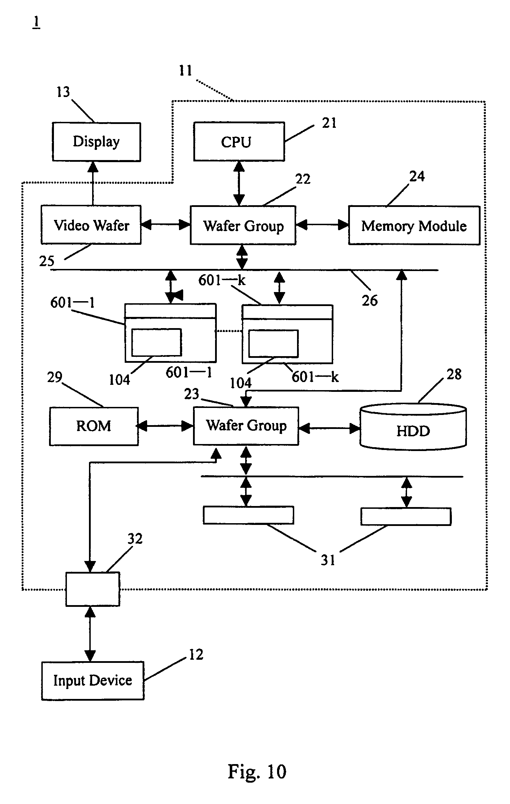

Fig. 10 is the block diagram of modified example 2 of the invention. The same parts as Fig.1 have the same symbols and the corresponding explanations are omitted.

In the processing system in the modified example, PCI boards 602-1∼602-k which an arithmetic unit 104 is mounted on are plugged in PCI slots 601-1∼601-k respectively.

PCI boards 602-1∼602-k are assigned processing by CPU 21, each having individual process. The arithmetic units 104 mounted on each of PCL boards 602-1∼602-k performs the assigned processing by CPU 21 in the above pipelining.

The processing results by PCI boards 602-1∼602-k are transmitted to CPU21. CPU21 integrates the processing results from PCI boards 602-1∼602-k to perform a serial of operations.

Furthermore, in the above modified example, although an arithmetic unit 104 is mounted on each of multiple PCI boards 602-1∼602-k, yet the processing system can be taken into consideration that multiple arithmetic units 104 are mounted on each PCI board and each arithmetic unit performs operation in parallel.

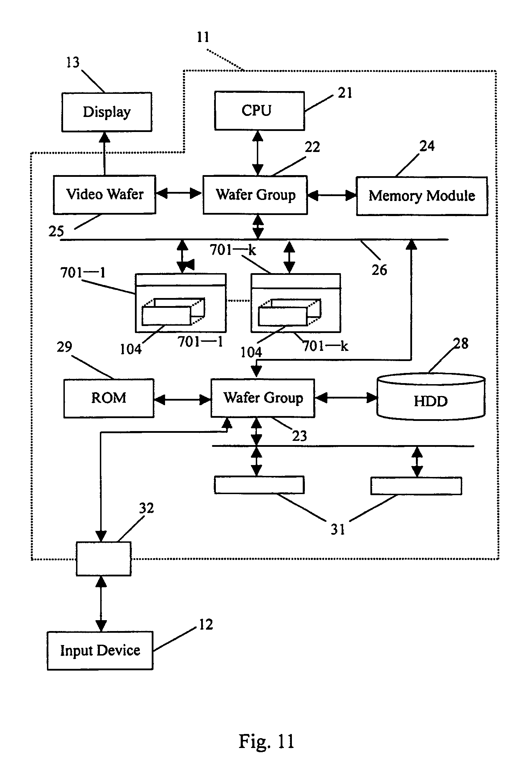

Fig. 11 is the block diagram of modified example 3 of the invention. The same parts as Fig.1 and Fig.10 have the same symbols and the corresponding explanations are omitted.

The processing system in the modified example involves j PCI boards 701-1∼701-j plugged in PCI slots 702-1∼702-j respectively, each PCI board have i arithmetic units 104-1∼1 04-i.

PCI boards 701-1∼701-j are assigned processing by CPU 21, each having i individual process. Each of PCI boards 701-1∼701-j assigns the i processes to arithmetic units 104-1∼104-i to perform in the above pipelining.

According to the modified example, I*J processes can be performed in parallel by j PCI boards 701-1∼701-j so that the processing is high-speed.

Furthermore, although the processing is performed by a single PC in the above modified example, yet the processing system can be taken into consideration that multiple computers are interconnected through network and the processing is distributed among the PCI boards in the computers to perform.

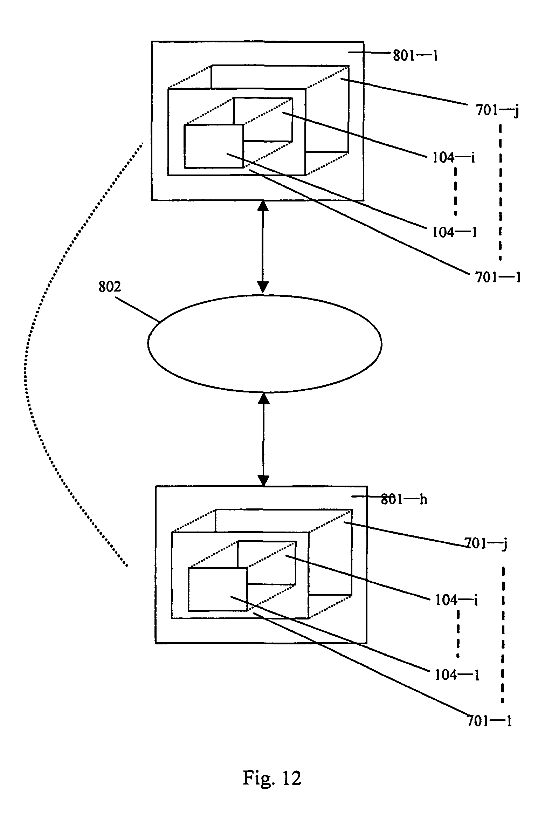

Fig. 12 is the block diagram of modified example 4 of the invention. The same parts as Fig.1 and Fig. 11 have the same symbols and the corresponding explanations are omitted.

The processing system in the modified example connects with PCs 801-1∼801-h through network 802. Each of PCs 801-1∼801-h has j PCI boards 701-1∼701-j, each of which has i arithmetic units.

According to the modified example, arithmetic units 104-1∼104-i can perform in parallel, so multiple PCs 801-1∼801-h can perform complex operation in parallel with high speed, and can deal with the large processing.

To summarize, according to the invention, the processing is distributed among multiple arithmetic units, and the serial of operations are performed in the pipelining in the preset order, so that the features of the processing device are high-speed, and so on.

## Claims

1. A processing device, comprising: multiple arithmetic cells, each selecting a predetermined one of multiple inputs and performing a reserved operation; reserving unit which presets the respective input and operation of the above multiple arithmetic cells. Wherein, the output of each arithmetic cell is supplied to one of the inputs of the multiple operation cells, and the input and operation of the above multiple arithmetic cells can be dynamically set by the above reserving unit.

2. A processing device according to claim 1, wherein input-selecting information reserving unit can be set by the above multiple arithmetic cells, and operation-selecting information reserving unit can be set by the above multiple arithmetic cells.

3. A processing device according to claim 2, wherein the above arithmetic cells involves: input multiplexer that selects the input according to the above input-selecting information in input-selecting information reserving unit, multiple arithmetic circuits that perform the reserved operation on the selected input by multiplexer, and output multiplexer that selects the arithmetic output according to the preset operation-selecting information in the above input-selecting information reserving unit.

4. A processing device according to claim 2 or claim 3, wherein the input and output of each of the above multiple arithmetic cells connects with the respective input-selecting information reserving unit to set the input-selecting information, and the reserved operation is performed by the operation-selecting information reserving unit to set the operation-selecting information.

5. A processing device according to claim 2, wherein the contents of the above input-selecting information reserving unit and operation-selecting information reserving unit is dynamically set by reserved operation program.

6. A processing device according to claim 3, wherein the contents of the above input-selecting information reserving unit and operation-selecting information reserving unit is dynamically set by preset operation program.

7. A processing device according to claim 4, wherein the contents of the above input-selecting information reserving unit and operation-selecting information reserving unit is dynamically set by preset operation program.

8. A processing system, wherein the processing device in claim 1 is composed of multiple levels of parts that perform in parallel.

9. A processing system, wherein the processing device in claim 2 is composed of multiple levels of parts that perform in parallel.

10. A processing system, wherein the processing device in claim 3 is composed of multiple levels of parts that perform in parallel.

11. A processing system, wherein the processing device in claim 4 is composed of multiple levels of parts that perform in parallel.

12. A processing system, wherein the processing device in claim 5 is composed of multiple levels of parts that perform in parallel.

13. A processing system, wherein the processing device in claim 6 is composed of multiple levels of parts that perform in parallel.

14. A processing system, wherein the processing device in claim 7 is composed of multiple levels of parts that perform in parallel.
